# EUROPEAN PATENT APPLICATION

(11) **EP 4 227 597 A1**
(43) Date of publication of application: **16.08.2023**
(21) Application number: 22472001.1
(22) Date of filing: 11.02.2022
(51) Int. Cl.: F24H 1/18, F24H 9/02, F24H 9/20, G01K 1/08, G01K 1/14, G01K 1/16, G01K 5/62, G01K 5/70, F24D 19/10

(54) **TEMPERATURE INDICATOR AND WATER HEATER INCLUDING SUCH TEMPERATURE INDICATOR**

(71) Applicant: Tesy Ood, 9701 Shumen (BG)
(72) Inventor: Kyurkchiev, Zhechko Angelov, 1166 Sofia (BG)
(74) Representative: Benatov, Samuil Gabriel

(57) **Abstract**

The temperature indicator according to the invention is used in the production of water heaters, and it is attached to the inner wall of a jacket (12) of the water heater. The temperature indicator (13) comprises housing (1) in which a scale with values (2) is located, in front of which a pointer (3) is mounted on a rotating shaft (4), which is located partially in a through hole in the front side and is connected to a temperature measuring mechanism located in the housing (1), comprising a bimetallic plate (5) in contact with a heat transfer element (6). An opening for the heat transfer element (6) is formed on the rear side of the housing (1), and the front side of the housing (1) has a peripheral board (7), which has a front mounting side surrounding the front side of the housing (1), on which mounting side is at least partially located a double-sided adhesive tape (8), wherein the heat transfer element (6) is a heat transfer plate protruding at least partially from the opening for the heat transfer element (6). It is possible that alternating ribs (10) and grooves (11), located parallel to the edge of the front opening of the housing (1), are formed on the mounting side of the peripheral board (7) in the sections where there is no double-sided adhesive tape (8).

## Description

The temperature indicator is applicable to water heating systems, such as water heaters for storage and heating of water for industrial and household purposes, and is used to measure the temperature of the water in the water heater.

### Background of the invention

A temperature indicator is known, comprising a housing, on the front side of which there is a scale with values, in front of which a pointer is mounted on a rotating shaft, which is located partially in a through hole in the front side and is connected to a temperature measuring mechanism encapsulated in the housing, comprising bimetallic plate in contact with heat transfer element. An opening is formed on the rear side of the housing for the heat transfer element, which is in contact with a metal lid, to measure the temperature of the water tank. A spring is placed under the metal lid to ensure that the lid presses against the water tank, and thus to ensure constant contact between the lid and the water tank. Around the front side of the housing there is a peripheral board, the rear side of which adheres to a jacket of the water heater when mounting the temperature indicator, i.e. the temperature indicator is mounted on the outer side of the jacket of the water heater. In this way, part of the housing of the temperature indicator protrudes above the plane of the jacket, which can lead to damage of the temperature indicator during packaging or transport of the water heater. This leads to defects in the device, and therefore wastage or need for repair. In order to protect the temperature indicator from such type of damage, an EPS guard is usually used, which is placed around the temperature indicator on the outer side of the jacket. Thus, by means of tightness, the EPS guard protects the temperature indicator in an event of unintentional hit or pressure. Despite the presence of an EPS guard, it is still possible for the temperature indicator to be damaged during transport, and the packaging of the water heater is difficult due to the protruding detail, which slows down the production process. Also, the use of EPS guard imposes additional costs and complicates the production process through additional steps to shape the final product, additional equipment for production of EPS guard, additional costs for materials, machinery and labor, and additionally the operator must be careful not to touch the protruding temperature indicator with the guard when packing.

### Summary of the invention

The object of the invention is to provide a temperature indicator which is mounted on a water heating system, for example a water heater, where the housing of the temperature indicator does not protrude above the jacket of the water heating system, and is impermeable to various materials located under the jacket, such as polyurethane foam.

This object is achieved by creating a temperature indicator, comprising a housing with opposite front and rear sides, on the front side of the housing there is a scale with values, in front of which a pointer is mounted on a rotating shaft, which is located partially in a through hole in the front side and is connected to a temperature measuring mechanism located in the housing, comprising a bimetallic plate in contact with a heat transfer element (thermal transfer element). An opening for the heat transfer element is formed in the rear side of the housing. The front side of the housing has a peripheral board, which has a front mounting side surrounding the front side of the housing, on which mounting side is at least partially located a double-sided adhesive tape, which holds the temperature indicator on the housing and prevent polyurethane foam from penetrating the contact area between the peripheral board of the temperature indicator and the jacket during foaming of the water heater.

The heat transfer element is a heat transfer plate protruding at least partially from the opening for the heat transfer element.

In a preferred embodiment of the invention, the scale with values and the pointer are covered by a front protective cover which is transparent at least in the area of the scale with values, wherein the peripheral board surrounds the front protective cover.

In one embodiment of the invention, the mounting side of the peripheral board is smooth.

In one embodiment of the invention, alternating ribs and grooves, which are parallel to the edge of the front opening of the housing, are formed on the mounting side of the peripheral board in the areas where there is no double-sided adhesive tape, i.e. double-sided adhesive tape is missing in these areas. Due to the double-sided adhesive tape, the temperature indicator rests tightly on the jacket wall, and thus said alternating ribs and grooves help in preventing polyurethane foam to penetrate the contact area between the peripheral board of the temperature indicator and the jacket during foaming of the water heater.

In one embodiment of the invention, the peripheral board in plan is in the form of a quadrangle with rounded corners, wherein the areas with alternating ribs and grooves are located in the rounded corner sections of the peripheral board and the double adhesive tapes are located in the straight sections between the corner sections. Alternatively, the peripheral board in plan can be in the form of a flat ring, wherein the mounting side of the peripheral board is completely covered with double-sided adhesive tape.

According to the invention, a water heater with temperature indicator mounted under the jacket is also provided, which water heater also comprises water tank with cold and hot water pipes mounted thereto, an outer jacket, polyurethane foam insulation between the water tank and the outer jacket. The temperature indicator is mounted to a technological opening in the outer jacket, which provides a heat bridge to the water tank by means of a heat transfer element. The housing of the temperature indicator is mounted noninvasively to the inner surface of the outer jacket around a technological opening by means of double-sided adhesive tape located on the periphery of the housing of the temperature indicator. In this way, after mounting, the housing of the temperature indicator does not protrude above the outer surface of the jacket, i.e. it is below the plane of the outer surface of the jacket. A purely visual advantage is that the water heater has a stylish line, without protruding and often incompatible with the design temperature indicators.

Preferably, the mounting side of the peripheral board of the temperature indicator is complementary to the inner surface of the outer jacket around the technological opening. When mounting a temperature indicator according to the invention, the mounting side of the peripheral board of the temperature indicator is resting tightly and glued at least partially by means of the double-sided adhesive tape on said inner surface of the outer jacket, and the heat transfer plate of the temperature indicator contacts under pressure the water tank.

The heat transfer plate is at an angle of less than 90° to the side surface of the water tank, so that when assembling the water heater, the plate does not protrude directly toward the water tank, thus making it difficult to assemble.

Preferably, at least partially transparent part of the protective cover of the temperature indicator housing, which protects the components in the temperature indicator housing during the use of the water heater, is placed in the technological opening of the jacket. It is possible for this at least partially transparent part to protrude slightly above the plane of the water heater, as long as this protrusion is insignificant and does not constitute an obstacle in packaging the water heater or during its transportation.

### Brief description of the drawings

The temperature indicator, object of the invention, is presented in more detail in the attached figures, where:
Figure 1 is a front view of the temperature indicator according to one embodiment of the invention.
Figure 2 is an exploded front axonometric view of the temperature indicator for device according to an embodiment of the invention.
Figure 3 is an exploded front axonometric view of the temperature indicator for device according to an embodiment of the invention.
Figure 4 is another front view of the temperature indicator according to another embodiment of the invention.
Figure 5 is a partial longitudinal section of a water heater with mounted temperature indicator, according to an embodiment of the invention.
Figure 6 shows the way of mounting the temperature indicator to water heater jacket, according to a preferred embodiment of the invention.

### Exemplary embodiment and application of the invention

In the present description, the terms "front", "rear", "bottom" and "top" refer to the arrangement of the elements of the temperature indicator and water heater in its normal operating position.

The temperature indicator according to the invention is used to measure the temperature of water in water tank of water tank systems, such as water heaters.

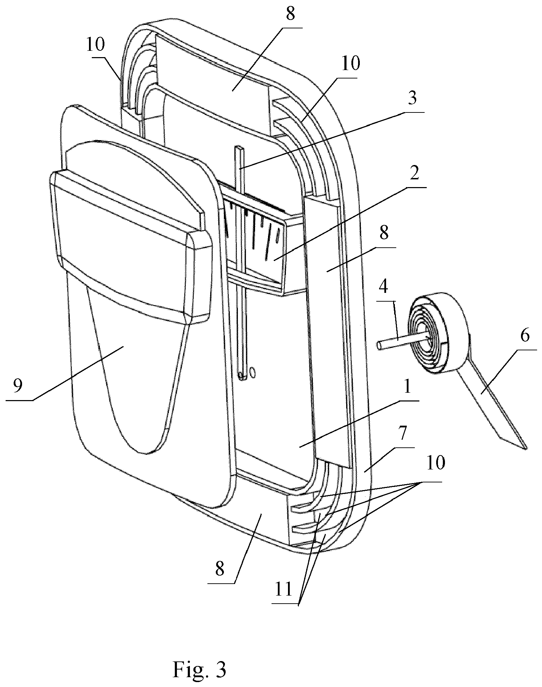

The temperature indicator 13 according to the invention, as shown in figure 3, comprises a housing 1 with opposite front and rear sides, wherein on the front side of the housing 1 there is a scale with values 2, in front of which a pointer 3 is mounted on a rotating shaft 4. The rotating shaft 4 is located partially in a through hole in the front side of the housing and is connected to a temperature measuring mechanism located in the housing 1. The temperature measuring mechanism comprises a bimetallic plate 5 in contact with a heat transfer element 6. An opening for the heat transfer element 6 is formed in the rear side of the housing 1.

The shaft 4 is made of steel.

The scale with values 2 can be a separate element or it can be printed on the surface of the front side of the temperature indicator 13.

The front side of the housing 1 has a peripheral board 7, which has a front mounting side surrounding the front side of the housing 1, on which mounting side the double-sided adhesive tape 8 is located.

The double-sided adhesive tape 8 is made of XPS in combination with an adhesive layer, or alternatively of foam rubber in combination with an adhesive layer.

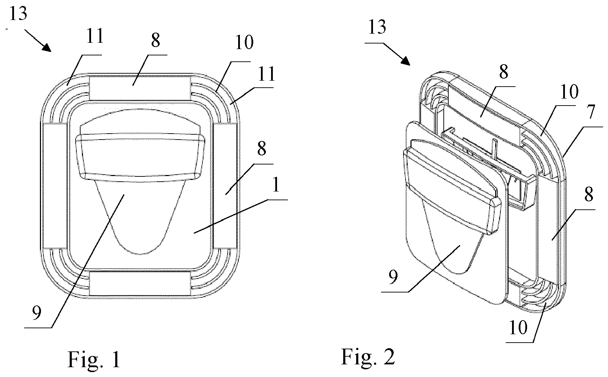

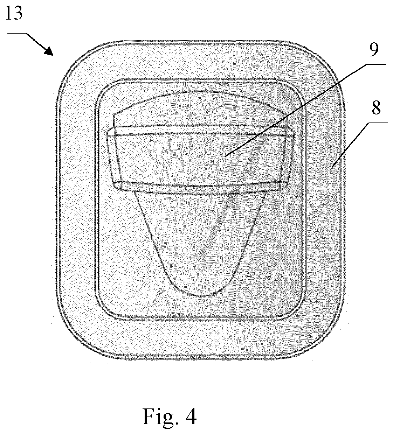

The double-sided adhesive tape 8 prevents the passage of polyurethane foam through the contact zone between the peripheral board 7 of the temperature indicator 13 and jacket 12 of a water heater during the process of foaming the water heater. Additionally, the double-sided adhesive tape 8 serves as a mounting element in the production of water heaters because it is a means to mount the temperature indicator 13 to the inner surface of the jacket 12 of a water heater. The double-sided adhesive tape 8 can be located on the entire mounting surface of the peripheral board 7 (Fig. 4) or, alternatively, it can be located only in certain areas (Fig. 1, 2, 6). In the latter case, alternating ribs 10 and grooves 11, which are parallel to the edge of the front opening of the housing 1, are formed on the parts of the mounting side of the peripheral board 7, where there is no double-sided adhesive tape 8, as shown in figures 1, 2 and 6.

The alternating ribs 10 and grooves 11 form a series of barriers to prevent the passage of polyurethane foam during the process of filling the water heater with polyurethane foam for insulation, in which the foam goes from liquid through creamy to solid form. As it goes through these phases, it increases in volume until it subsides and reaches the solid phase. Due to the alternating ribs 10 and grooves 11, if foam enters them, it can expand and subside without being able to pass all the ribs 10 and grooves 11 and to enter the inside of the temperature indicator 13. After passing the outermost rib 10, the foam enters the outermost groove 11 and fills it, thus reducing its speed, and the amount of foam reaching the next rib 10 and, respectively, the next groove 11 is less. The number of ribs 10 and grooves 11 may vary, depending on the manufacturer's preferences. The more alternating ribs 10 and grooves 11 are used, the more obstacles are provided so that the polyurethane foam does not enter the temperature indicator 13. For example, as shown in Figures 1, 2 and 6, three ribs 10 and three grooves 11 can be formed, and even if the polyurethane foam passes through the first outermost rib 10 and the first groove 11, it can stop at the second rib 10 or in the second groove 11, and if it passes them, it can stop at the third rib 10 or in the third groove 11.

The peripheral board 7, in plan, can have different shapes. For example, it can be in the form of a simple polygon, with alternating ribs 10 and grooves 11 located in the corner sections and the double-sided adhesive tape 8 located between them in the straight sections of the peripheral board 7. In particular, as shown in the figures, the peripheral board 7 in plan can be in the form of a convex quadrangle with rounded corners, wherein the areas with alternating ribs 10 and grooves 11 are located in the corner rounded sections of the peripheral board 7, and double-sided adhesive tapes are located in the straight sections between the corner sections. Accordingly, it is possible that the corners of the peripheral board 7 are rounded or right angles, but rounded ones are preferable because rounded ones achieve a barrier of ribs 10, which is not interrupted by edges that may be a weak spot in the seal due to poor adhesion to the jacket. Often the edges of plastic products can be stress concentrators after injection molding of the detail which leads to its deformation. Also, the edges can make it difficult to fill the detail during the injection molding and these places of the detail are unfilled/unmolded and crooked.

Alternatively, the peripheral board 7 in plan can be in the form of a flat ring, wherein the peripheral board 7 is covered completely with double-sided adhesive tape 8.

The heat transfer element 6 is a heat transfer plate that can protrude entirely or partly from the opening for the heat transfer element 6, as shown in Figure 3. The heat transfer plate not only provides transfer of heat from the water tank of the water heater to the measuring part of the temperature indicator 13, but also allows easy, technological and safe mounting of assembled together jacket 12 and temperature indicator 13 to the water tank of the water heater. This cannot be achieved by using a heat transfer cylinder, as in the prior art, because when the jacket slides on the water tank, the heat transfer element 6 must pass the welding seam of the water heater, which protrudes about 2-7 mm above the main cylindrical surface of the water tank, and accordingly, if a heat transfer cylinder is used, it detaches from the temperature indicator in the event of a collision with said welding seam. The heat transfer plate according to the invention overcomes this problem, as it withstands the collision with said welding seam of the water heater.

The heat transfer plate is made of heat-conducting metal, such as steel or brass.

As shown in Fig. 1 and 2, the scale with values 2 and the pointer 3 can be covered by a front protective cover 9 which is transparent at least in the area of the scale with values 2, wherein the peripheral board 7 surrounds the front protective cover 9. The front protective cover 9 can be fully transparent, or only partially transparent, as long as it provides visual access to the area of the scale with values 2. The front protective cover 9 can be made of crystalline polystyrene, or polycarbonate, or PMMA, or other transparent material providing visual access to the pointer 3 and scale 2 of the temperature indicator.

The mounting side of the peripheral board 7 can be smooth or alternatively matte, as long as it is suitable for placing double-sided adhesive tape 8 on it. Polishing the surface increases the possibility of good adhesion with the double-sided adhesive tape 8.

The housing 1 of the temperature indicator 13 is preferably made of a polymeric material, for example plastic, in particular polystyrene or ABS or polypropylene, but can alternatively be made of a metal such as aluminum, as long as it can withstand the strength of polyurethane foam and does not crush during its swelling (expansion).

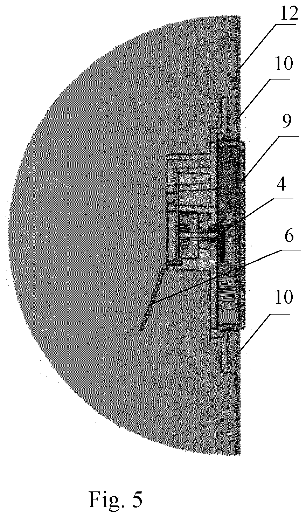

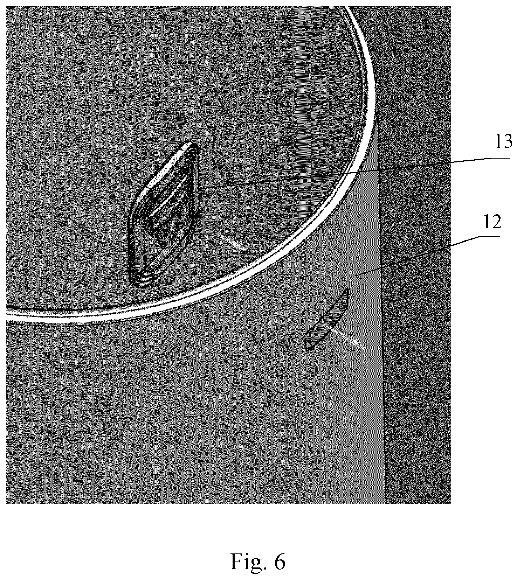

The temperature indicator 13 according to the invention is part of a water heater comprising other conventional water heater elements, such as water tank with cold and hot water pipes mounted thereto, an outer jacket 12, polyurethane foam insulation between the water tank and the outer jacket 12. The temperature indicator 13 is mounted under the jacket 12 of the water heater. The temperature indicator 13 has a peripheral board 7, resting tightly with its entire circumference on the inner surface of the outer jacket 12, around a technological opening in the outer jacket 12 (Fig. 5, 6). Resting tightly means that the temperature indicator 13 is pressed against the inner surface of the outer jacket 12 so that no gap is formed between them. The housing 1 of the temperature indicator 13 is mounted noninvasively to the inner surface of the outer jacket 12 around the technological opening by double-sided adhesive tape 8 located on the periphery of the housing 1 of the temperature indicator 13. When mounting a temperature indicator according to the invention, the mounting side of the peripheral board 7 of the temperature indicator 13 is complementary to the inner surface of the outer jacket 12 around the technological opening. Thus, for example, the top and bottom sides of the peripheral board 7 are in the form of arcs of a circle when the jacket 12 of the water heater is cylindrical. The mounting side of the peripheral board 7 of the temperature indicator 13 is tightly pressed and glued at least partially by the double-sided adhesive tape 8 to said inner surface of the outer jacket 12, and the heat transfer plate of the temperature indicator 13 contacts, under pressure, the water tank. Thus, after mounting, the front side of the housing 1 of the temperature indicator 13 is in one plane with or below the plane of the outer surface of the jacket 12, i.e. it does not protrude above the outer surface of the jacket 12. The temperature indicator 13 provides a heat bridge with the water tank by means of heat transfer element 6. The heat transfer plate is at an angle of less than 90° to the side surface of the water tank. The angle of less than 90° makes it easier for the plate to slide on the water tank when assembling the water heater.

Preferably, an at least partially transparent part of the protective cover 9 of the housing 1 of the temperature indicator 13 is placed in the technological opening of the jacket 12. It is possible for this at least partially transparent part to protrude slightly above the plane of the water heater, as long as this protrusion is insignificant and does not constitute an obstacle when packaging the water heater or during its transportation.

The reference numbers of the technical features are included in the claims only for the purpose of increasing the comprehensibility of the claims and, therefore, these reference numbers do not have any limiting effect on the interpretation of the elements indicated by these reference numbers.

## Claims

1. Temperature indicator, comprising a housing (1) with opposite front and rear sides, on the front side of the housing (1) there is a scale with values (2), in front of which a pointer (3) is mounted on a rotating shaft (4), which is located partially in a through hole in the front side and is connected to a temperature measuring mechanism located in the housing (1), which temperature measuring mechanism comprises a bimetallic plate (5) in contact with a heat transfer element (6), wherein an opening for the heat transfer element (6) is formed in the rear side of the housing (1), and the front side of the housing (1) has a peripheral board (7), **characterized in that** the peripheral board (7) has a front mounting side surrounding the front side of the housing (1), on which mounting side is at least partially located a double-sided adhesive tape (8), wherein the heat transfer element (6) is a heat transfer plate protruding at least partially from the opening for the heat transfer element (6).

2. Temperature indicator according to claim 1, **characterized in that** the scale with values (2) and the pointer (3) are covered by a front protective cover (9) which is transparent at least in the area of the scale with values (2), wherein the peripheral board (7) surrounds the front protective cover (9).

3. Temperature indicator according to claims 1 or 2, **characterized in that** the mounting side of the peripheral board (7) is smooth.

4. Temperature indicator according to claims 1, 2 or 3, **characterized in that** alternating ribs (10) and grooves (11), which are parallel to the edge of the front opening of the housing (1), are formed on the mounting side of the peripheral board (7) in the areas where there is no double-sided adhesive tape (8).

5. Temperature indicator according to claim 4, **characterized in that** the peripheral board (7) in plan is in the form of a quadrangle with rounded corners, wherein the areas with alternating ribs (10) and grooves (11) are located in the rounded corner sections of the peripheral board (7), and the double-sided adhesive tapes 8 are located in the straight sections between the corner sections.

6. Temperature indicator according to claims 1, 2 or 3, **characterized in that** the peripheral board (7) in plan is in the form of a flat ring, wherein the mounting side of the peripheral board (7) is covered completely with double-sided adhesive tape (8).

7. Water heater comprising water tank with cold and hot water pipes mounted thereto, outer jacket (12), polyurethane foam insulation between the water tank and the outer jacket (12), wherein a temperature indicator (13) is mounted to a technological opening in the outer jacket (12), which temperature indicator (13) provides a heat bridge to the water tank by means of a heat transfer element (6), **characterized in that** the housing (1) of the temperature indicator (13) is mounted noninvasively to the inner surface of the outer jacket (12) around a technological opening by means of double-sided adhesive tape located on the periphery of the housing (1) of the temperature indicator (13).

8. Water heater according to claim 7, **characterized in that** the temperature indicator (13) is according to any of claims 1 to 6, wherein a mounting side of the peripheral board (7) of the temperature indicator (13) is complementary to the inner surface of the outer jacket (12) around the technological opening, wherein the mounting side of the peripheral board (7) of the temperature indicator (13) is resting tightly and glued at least partially by means of the double-sided adhesive tape (8) on said inner surface of the outer jacket (12), and a heat transfer plate (6) of the temperature indicator (13) contacts, under pressure, the water tank.

9. Water heater according to claim 8, **characterized in that** an at least partially transparent part of a protective cover (9) of the housing (1) of the temperature indicator (13) is placed in the technological opening of the jacket (12).

10. Water heater according to claims 8 or 9, **characterized in that** the heat transfer plate (6) is at an angle of less than 90° to the side surface of the water tank.

11. Water heater according to claims 7 to 10, **characterized in that** after mounting, the housing (1) of the temperature indicator (13) does not protrude above the outer surface of the jacket (12) of the water heater.
